# EUROPÄISCHE PATENTANMELDUNG

(11) **EP 0 886 133 A1**
(43) Veröffentlichungstag der Anmeldung: **23.12.1998**
(21) Anmeldenummer: 98110310.4
(22) Anmeldetag: 05.06.1998
(51) Int. Cl.: G01K 17/06

(54) **Vorrichtung zur Erfassung und Auswertung von temperaturabhängigen Verbrauchswerten**

(30) Priorität: 12.06.1997 DE 29710249 U
(71) Anmelder: Raab Karcher Energy Services GmbH, 45131 Essen (DE)
(72) Erfinder: Wolff, Manfred, Dipl.-Ing., 68526 Ladenburg (DE); Mügge, Günter, Dr.-Ing., 48159 Münster (DE); Afshari, Afshin, Dr., 45147 Essen (DE)
(74) Vertreter: Stark, Walter, Dr.-Ing.

(57) **Zusammenfassung**

Vorrichtung zur Erfassung und Auswertung von temperaturabhängigen Verbrauchswerten oder Meßwerten anderer physikalischer Größen, insbesondere als elektronischer Heizkostenverteiler, mit einer Anzeigeeinrichtung, einer Energieversorgung und wenigstens einem Temperatursensor, die jeweils mit einer Auswerteeinrichtung verbunden sind und insbesondere mit einer mit der Auswerteeinrichtung verbundenen Schnittstelle und/oder Bedieneinrichtung in einem Gehäuse angeordnet sind. Um eine Vorrichtung anzugeben, bei der nicht jeder Heizkostenverteiler zeitaufwendig separat abgelesen werden muß und kein hoher Materialaufwand dadurch entsteht, daß jeder Heizkostenverteiler über eine eigene Anzeigeeinrichtung, eine eigene Energieversorgung, eigene Temperatursensoren und eine eigene Auswerteeinrichtung verfügen muß, soll zumindest eines dieser Bauteile aus der Vorrichtung ausgegliedert sein und sowohl die Vorrichtung als auch das(die) ausgegliederte(n) Bauteil(e) jeweils über entsprechende Empfangs- und/oder Sendeeinrichtungen zur drahtlosen Kommunikation verfügen.

## Beschreibung

Die Erfindung betrifft eine Vorrichtung zur Erfassung und Auswertung von temperaturabhängigen Verbrauchswerten oder Meßwerten anderer physikalischer Größen, insbesondere als elektronischer Heizkostenverteiler, mit einer Anzeigeeinrichtung, einer Energieversorgung und wenigstens einem Temperatursensor, die jeweils mit einer Auswerteeinrichtung verbunden sind und insbesondere mit einer mit der Auswerteeinrichtung verbundenen Schnittstelle und/oder Bedieneinrichtung in einem Gehäuse angeordnet sind.

Derartige Vorrichtung sind aus der Praxis bekannt und können z. B. als Ein-Sensor-, Zwei-Sensor- oder Drei-Sensor-Gerät ausgebildet sein. Bei Vorrichtungen mit mehreren Sensoren sind diese üblicherweise als Raumlufttemperatursensor, Vorlauftemperatursensor etc. von der restlichen Vorrichtung beabstandet angeordnet und mit dieser über ein Kabel verbunden. In der Anwendung als Heizkostenverteiler sind derartige Vorrichtungen gebräuchlicherweise direkt an den entsprechenden Heizkörpern angebracht.

Nachteilig hierbei ist, daß zum einen jeder Heizkostenverteiler zeitaufwendig separat abgelesen werden muß und zum anderen ein hoher Materialaufwand dadurch entsteht, daß jeder Heizkostenverteiler über eine eigene Anzeigeeinrichtung, eine eigene Energieversorgung, eigene Temperatursensoren und eine eigene Auswerteeinrichtung verfügt.

Aufgabe der Erfindung ist es, die vorgenannten Nachteile zu vermeiden.

Diese Aufgabe wird gelöst durch eine Vorrichtung zur Erfassung und Auswertung von temperaturabhängigen Verbrauchswerten oder Meßwerten anderer physikalischer Größen, mit einer Anzeigeeinrichtung, einer Energieversorgung und wenigstens einem Temperatursensor, die jeweils mit einer Auswerteeinrichtung verbunden sind und insbesondere mit einer mit der Auswerteeinrichtung verbundenen Schnittstelle in einem Gehäuse angeordnet sind, wobei zumindest eines dieser Bauteile aus der Vorrichtung ausgegliedert ist und sowohl die Vorrichtung als auch das(die) ausgegliederte(n) Bauteil(e) jeweils über entsprechende Empfangs- und/oder Sendeeinrichtungen zur drahtlosen Kommunikation verfügt (verfügen). Dabei kann zumindest eines der ausgegliederten Bauteile ein Temperatursensor sein. Hierdurch werden aufwendige Verkabelungsmaßnahmen z. B. bei einem oder mehreren ausgegliederten Temperatursensoren, wie sie bei Heizkostenverteilern mit mehreren Sensoren häufig zur Vorlauf-/Rücklauftemperaturmessung bzw. zur Raumlufttemperaturmessung eingesetzt werden, vermieden.

Hierbei kann vorteilhafterweise zumindest einer der Temperatursensoren ein Oberflächenwellensensor mit wenigstens einer Oberflächenwellenanordnung auf einem Substrat mit piezoelektrischen Eigenschaften, das insbesondere auf einem Trägermaterial angebracht ist, sein, so daß eine separate Energieversorgung für einen solchen, insbesondere ausgegliederten Temperatursensor nicht benötigt wird, da der Oberflächenwellensensor ein ablesbarer Sensor ist, der sowohl den Temperaturmeßwert als auch eine identifizierende Kennung aussendet. Bei passiven Oberflächenwellensensoren kann die Aussendung ein Echo sein, daß durch Empfang einer Abfragesendung verursacht wird, während bei aktiven Sensoren die Energie zur Aussendung im/vom Oberflächenwellensensor selbst entsteht.

Bei einem bevorzugten Ausführungsbeispiel der Erfindung kann das (die) ausgegliederte(n) Bauteil(e) in eine Zentraleinheit für zumindest zwei Vorrichtungen integriert sein. Hierbei kann das ausgegliederte und in die Zentraleinheit integrierte Bauteil die Anzeigeeinrichtung und/oder die Auswerteeinrichtung und/oder die Energieversorgung sein, wobei das jeweilige Bauteil vorzugsweise als Zentral-Multifunktionsanzeigeeinrichtung, als Zentral-Multifunktionsauswerteeinrichtung bzw. als zentrale Energieversorgung für die gesamte Zentraleinheit ausgebildet sein kann. Durch solch eine Vorrichtung wird z. B. bei Ausgliederung der Anzeigeeinrichtung als eine Zentral-Multifunktionsanzeigeeinrichtung in eine Zentraleinheit ein vereinfachtes Ablesen mehrerer Verbrauchs-/Meßwerte an einer Stelle auf einer Anzeigeeinrichtung ermöglicht, bei Ausgliederung von Auswerteeinrichtung und/oder Energieversorgung, die ebenfalls in ein Gesamtbauteil integriert sind, kann zudem der Materialaufwand deutlich reduziert werden.

Im folgenden werden in der Zeichnung dargestellte Ausführungsbeispiele der Erfindung erläutert. Es zeigen:
- Fig. 1: ein erstes Ausführungsbeispiel einer erfindungsgemäßen Vorrichtung,
- Fig. 2: ein zweites Ausführungsbeispiel einer erfindungsgemäßen Vorrichtung und
- Fig. 3: ein drittes Ausführungsbeispiel einer erfindungsgemäßen Vorrichtung.

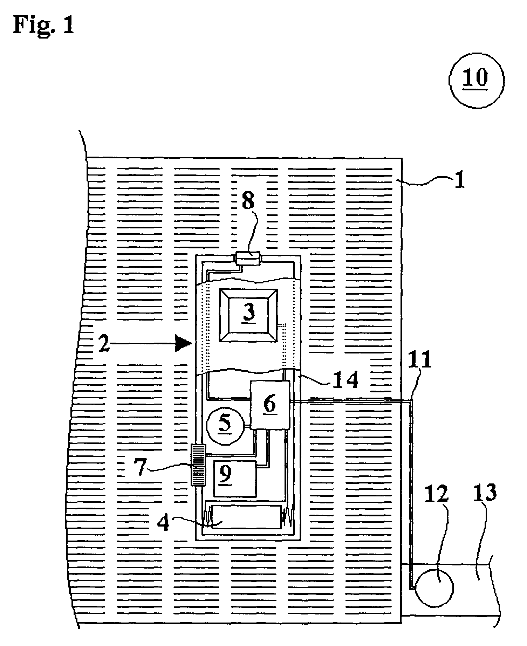

Fig. 1 zeigt eine an einem Heizkörper 1 befestigte Vorrichtung 2 zur Erfassung und Auswertung von temperaturabhängigen Verbrauchswerten oder Meßwerten anderer physikalischer Größen in Form eines elektronischen Heizkostenverteilers mit einer Anzeigeeinrichtung 3, einer Energieversorgung 4 und einem in die Vorrichtung 2 integrierten Temperatursensor 5, die jeweils mit einer Auswerteeinrichtung 6 verbunden sind. Weiter sind an die Auswerteeinrichtung 6 eine Schnittstelle 7 und eine Bedieneinrichtung 8 sowie eine Sende-/Empfangseinrichtung 9 zur drahtlosen Kommunikation mit einem aus der Vorrichtung 2 ausgegliederten Oberflächenwellensensor 10 verbunden. Über Kabel 11 ist ein ebenfalls aus der Vorrichtung 2 ausgegliederter Temperatursensor 12, der an einer Vorlaufleitung 13 des Heizkörpers 1 angebracht ist, mit der Auswerteeinrichtung 6 verbunden. Die gesamte Vorrichtung ist in einem Gehäuse 14 untergebracht.

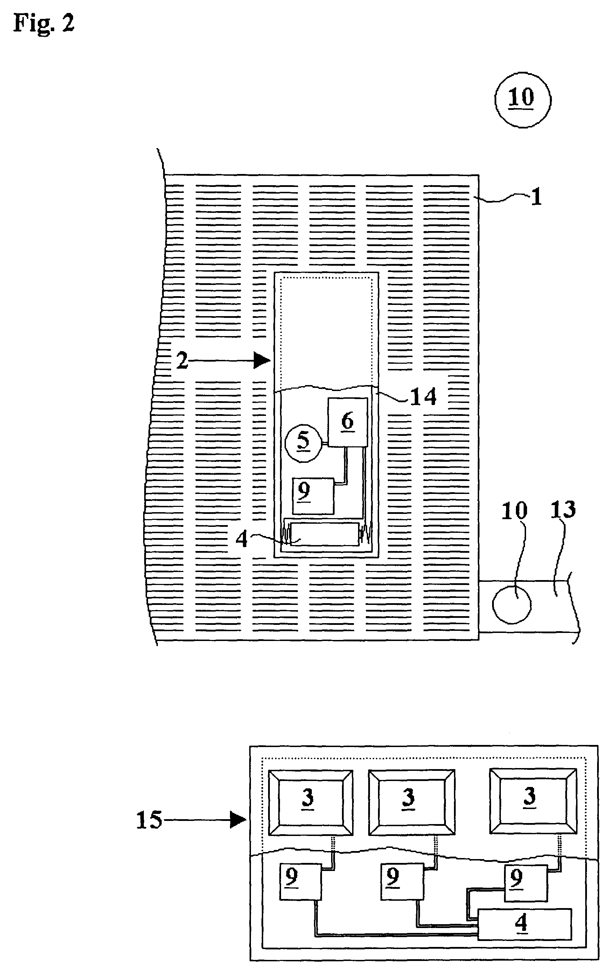

Bei dem in Fig. 2 dargestellten Ausführungsbeispiel ist ebenfalls eine Vorrichtung 2 an einem Heizkörper 1 befestigt. In dem Gehäuse 14 der Vorrichtung 2 sind die Energieversorgung 4, der Temperatursensor 5, die Auswerteeinrichtung 6 sowie die Sende-/Empfangseinrichtung 9 untergebracht. Sowohl an der Vorlaufleitung 13 als auch an einer nicht dargestellten Raumwand sind jeweils ein Oberflächenwellensensor 10 angebracht, die drahtlos mit der Sende-/Empfangseinrichtung 9 der Vorrichtung 2 kommunizieren können. In einer Zentraleinheit 15 sind neben einer Energieversorgung 4 und Sende-/Empfangseinrichtungen 9 aus der dargestellten Vorrichtung 2 sowie aus nicht dargestellten Vorrichtungen 2 ausgegliederte Anzeigeeinrichtungen 3 vorhanden. Über die Sende-/Empfangseinrichtungen 9 kommuniziert die Zentraleinheit 15 mit den jeweiligen Vorrichtungen 2.

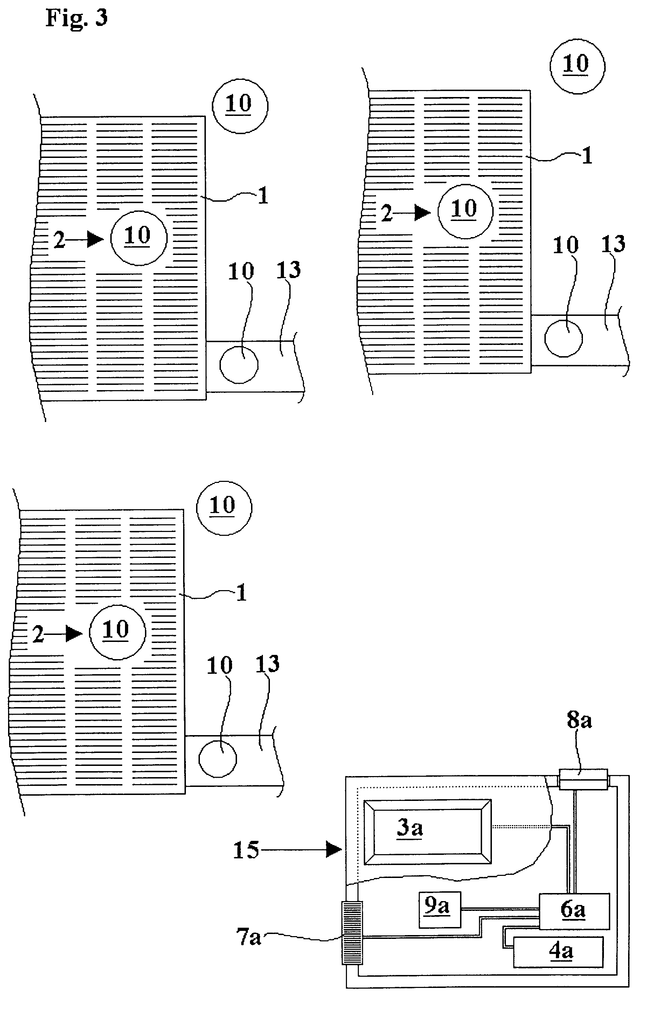

Die in Fig. 3 dargestellten Vorrichtungen 2 weisen lediglich noch einen Oberflächenwellensensor 10 auf, der die Funktion von Temperatursensor 5 und Sende-/Empfangseinrichtung 9 in sich vereint. Anzeigeeinrichtungen 3, Energieversorgungen 4 und Auswerteeinrichtungen 6 sowie Schnittstellen 7 und Bedieneinrichtungen 8 sind zusammen mit den Sende-/Empfangseinrichtungen 9 in die Zentraleinheit 15 ausgegliedert worden. Hierbei sind die Anzeigeeinrichtungen 3 als Zentral-Multifunktionsanzeigeeinrichtung 3a ausgebildet und die Energieversorgungen 4 gewährleisten als zentrale Energieversorgung 4a für die gesamte Zentraleinheit 15, daß über die als Zentral-Multifunktionsauswerteeinrichtung 6a ausgebildeten Auswerteeinrichtungen 6 auch die anderen Bauteile zentrale Schnittstelle 7a, zentrale Bedieneinrichtung 8a und zentrale Sende-/Empfangseinrichtung 9a mit Energie versorgt werden.

## Patentansprüche

1. Vorrichtung (2) zur Erfassung und Auswertung von temperaturabhängigen Verbrauchswerten oder Meßwerten anderer physikalischer Größen, insbesondere als elektronischer Heizkostenverteiler, mit einer Anzeigeeinrichtung (3), einer Energieversorgung (4) und wenigstens einem Temperatursensor (5), die jeweils mit einer Auswerteeinrichtung (6) verbunden sind und insbesondere mit einer mit der Auswerteeinrichtung (6) verbundenen Schnittstelle (7) und/oder Bedieneinrichtung (8) in einem Gehäuse angeordnet sind, dadurch gekennzeichnet, daß zumindest eines dieser Bauteile aus der Vorrichtung (2) ausgegliedert ist und sowohl die Vorrichtung (2) als auch das (die) ausgegliederte(n) Bauteil(e) jeweils über entsprechende Empfangs- und/oder Sendeeinrichtungen (9) zur drahtlosen Kommunikation verfügt (verfügen).

2. Vorrichtung (2) nach Anspruch 1, dadurch gekennzeichnet, daß zumindest eines der ausgegliederten Bauteile ein Temperatursensor (5) ist.

3. Vorrichtung (2) nach Anspruch 1 oder 2, dadurch gekennzeichnet, daß zumindest einer der Temperatursensoren (5) ein Oberflächenwellensensor (10) mit wenigstens einer Oberflächenwellenanordnung auf einem Substrat mit piezoelektrischen Eigenschaften, das insbesondere auf einem Trägermaterial angebracht ist, ist.

4. Vorrichtung (2) nach einem der Ansprüche 1 bis 3, dadurch gekennzeichnet, daß das (die) ausgegliederte(n) Bauteil(e) in eine Zentraleinheit (15) für zumindest zwei Vorrichtungen (2) integriert ist (sind).

5. Vorrichtung (2) nach Anspruch 4, dadurch gekennzeichnet, daß ein ausgegliedertes und in die Zentraleinheit (15) integriertes Bauteil die Anzeigeeinrichtung (3) ist.

6. Vorrichtung (2) nach Anspruch 5, dadurch gekennzeichnet, daß die Anzeigeeinrichtung (3) als eine Zentral-Anzeigeeinrichtung, insbesondere als eine Zentral-Multifunktionsanzeigeeinrichtung (3a) ausgebildet ist.

7. Vorrichtung (2) nach einem der Ansprüche 4 bis 6, dadurch gekennzeichnet, daß ein ausgegliedertes und in die Zentraleinheit (15) integriertes Bauteil die Auswerteeinrichtung (6) ist.

8. Vorrichtung (2) nach Anspruch 7, dadurch gekennzeichnet, daß die Auswerteeinrichtung (6) als eine Zentral-Auswerteeinrichtung, insbesondere als eine Zentral-Multifunktionsauswerteeinrichtung (6a) ausgebildet ist.

9. Vorrichtung (2) nach einem der Ansprüche 4 bis 8, dadurch gekennzeichnet, daß ein ausgegliedertes und in die Zentraleinheit (15) integriertes Bauteil die Energieversorgung (4) ist.

10. Vorrichtung (2) nach Anspruch 9, dadurch gekennzeichnet, daß die Energieversorgung (4) als eine zentrale Energieversorgung (4a) für die gesamte Zentraleinheit (15) ausgebildet ist.
